# EUROPEAN PATENT APPLICATION

(11) **EP 0 523 775 A1**
(43) Date of publication of application: **20.01.1993**
(21) Application number: 92202012.8
(22) Date of filing: 02.07.1992
(51) Int. Cl.: F16L 15/04

(54) **Universal packing sleeve**

(30) Priority: 03.07.1991 NL 9101160
(71) Applicant: Ymmegrund, Willem Frederick, Jr., NL-2202 JL Noordwijk (NL)
(72) Inventor: Ymmegrund, Willem Frederick, Jr., NL-2202 JL Noordwijk (NL)
(74) Representative: Smulders, Theodorus A.H.J., Ir.

(57) **Abstract**

A packing sleeve for thread connections, comprising a substantially annular body and a cuff, wherein, according to the invention, for the universal use of the packing sleeve (3) the annular body (4), by design and material selection, forms a stiff stop ring (4) for upsetting the cuff (5) and for permitting the packing sleeve (3) to be gripped by hand or with tools, and the cuff (5) is flexible.
The invention further provides a method of effecting a sealing thread connection with the packing sleeve (3) according to the invention.

## Description

This invention relates to a packing sleeve for thread connections, comprising a substantially annular body and a cuff.

Such a packing sleeve is disclosed in DD-A-160 006 (Voigt, H.).

The known packing sleeve serves to replace known sealing materials such as hemp, tape and sealing compounds.

Drawbacks of sealing materials such as hemp, tape and sealing compounds are that applying them still requires some skill, although materials which are increasingly easier to process have become available, and that at an industrial level, where large numbers of the same thread connections are to be realized, it is difficult to guarantee that all connections satisfy the minimum quality requirements set. Moreover, the required operations are time-consuming. Further, thread connections in which hardening compounds have been used can hardly be disassembled anymore. If sealing material is not applied evenly to some extent, this will lead to an uneven compression during the effectuation of the screw connection and no durable, reliable seal can be guaranteed.

The advantage of the use of hemp, tape and sealing compounds is that they can be applied to a thread at any desired point, so that the connection can also be effected on thread connections where the male threaded part is provided with a continuous thread.

The above-mentioned patent specification DD-A-160 006 describes a packing sleeve which is made entirely of one thermoplastic material. This known packing sleeve has the disadvantage that it can only be applied to a male threaded part which at the end thereof is provided with thread of a length matching the packing sleeve. The cuff of the known packing sleeve must have a length which is about 1-1.5 threads shorter than the length of the thread of the male threaded part. The known packing sleeve must always be turned as far as the end of the thread of the male threaded part. Moreover, the annular body is provided with a hexagonal or octagonal outer surface for mechanical tool engagement. This is necessary because the thermoplastic material of the annular body does not offer sufficient strength for the packing sleeve to be turned onto the male threaded part without being embraced by mechanical tools. Another disadvantage of the known packing sleeve is that the female part of the thread connection must be provided with an abutment surface especially designed to match the packing sleeve, which surface also contributes to the seal of the known packing sleeve, and that the female threaded part must be turned onto the packing sleeve with force using mechanical tools. This known packing sleeve can therefore be used only for male threaded parts of normalized thread length and female threaded parts having a special abutment surface, each connection requiring a packing sleeve and female threaded part especially designed to match that connection. Accordingly, this packing sleeve cannot be designated as "universal".

The known packing sleeve has the advantage that it enables quick and simple assembly which can also be carried out by non-skilled workers, provided that use is made of special tools and fittings.

The object of the invention is to combine the advantages of hemp, tape, or sealing compounds, i.e. the universal applications, and of the known packing sleeve, i.e., quick and simple assembly. It is another object of the invention to provide a packing sleeve which can be mounted by hand without requiring the use of mechanical means.

To that end, the packing sleeve of the type described in the preamble is characterized in that, for the universal use of the packing sleeve, the annular body, by design and material selection, forms a stiff stop ring for upsetting the cuff and for enabling the packing sleeve to be gripped by hand or with tools, and that the cuff is flexible.

In mounted position, the plastics of the cuff has partly penetrated between the threads of the female and male parts into sealing engagement therewith whilst a further part of the cuff has been upset between the front end of the female threaded part and the stop ring and thereby ensures complete circumferential sealing and retention.

The advantage of the use of such a packing sleeve is that without any particular skills being required, a proper distribution and positioning of the sealing and retaining material in a thread connection is ensured at all times. Fitting the sleeve requires only a fraction of the time required for applying hemp, tape, sealing compounds and similar materials for the same purpose, and the packing sleeve can be used for all types of pipe thread connections, i.e. for pipes or the like for conveying liquids as well as gases.

Such a packing sleeve further offers the advantage that the stop ring of the packing sleeve in mounted position need not be disposed against a stop or against the run-out of the male threaded part. No requirements are set in respect of the surface of the female part of the thread connection since the flexible material of the cuff is upset between the stop ring and the female threaded part and thus forms a seal.

It is then particularly advantageous when, in accordance with a further elaboration of the invention, the stop ring and the cuff are each made of materials which have been chosen appropriately in view of their functions. This offers the possibility of making the stop ring of a different material than the cuff. The use of different materials for the stop ring and the cuff offers the possibility of optimally matching the two parts to their functions. For instance, the material of the cuff must provide a durable seal and be capable of resisting the media with which the cuff is in contact. The stop ring should have a good rigidity and strength to be able to serve as a stop and have sufficient strength to be mounted on the thread of the male threaded part by hand as well as mechanically.

It is particularly advantageous when, in accordance with a further elaboration of the invention, the stop ring, which can be made for instance of steel, copper or of a plastics, is provided with internal thread which fits the thread of the screw connection to be sealed. A stop ring of such design does not require a flange, thread end or similar stop on the male part of the thread connection. The internal thread of the stop ring is preferably chosen such that at the end of the thread of the male part the ring can still be tightened by hand.

In an alternative embodiment of the packing sleeve, the ring can be made of stiff yet soft plastics, enabling thread to be tapped as the sleeve is being fitted.

In further elaboration of the invention, the cuff has an inside diameter which is smaller than the outside diameter of the thread of the male part. Thus, the cuff, while being fitted over the male part of the thread connection, already bears on the thread and will thus be certainly engaged when the connection is effected.

The cuff may at the free end thereof have a smaller diameter than the outside diameter of the internal thread of the female threaded part. It is thus guaranteed that the cuff material is engaged directly at the outset of the effectuation of the thread connection.

In order to effect improved filling of the thread connection with cuff material, the cuff may be provided with thread on the inside thereof.

In accordance with a further elaboration of the invention, the stop ring may be made of polyoxymethylene, polyacetal or a similar plastics and the cuff may be made of synthetic rubber, rubber, polytetrafluoroethene (Teflon) or a similar plastics. Such materials eminently satisfy the functions and requirements of the stop ring and the cuff and their use is accordingly preferred.

It is also possible to make the ring of metal.

From production-technical considerations, it may be advantageous for the packing sleeve to be designed as one piece, whilst the stop ring, by design or by some (after)treatment, has a stiffness such that it can serve to upset the cuff and enables the packing sleeve to be gripped by hand or with tools.

In accordance with a further embodiment of the invention, the stiffness of the stop ring can then be obtained by a metal ring embedded in the stop ring.

In accordance with a further elaboration of the invention, in a packing sleeve of such design, the length of the cuff should be at least equal to the pitch of the thread of the male threaded part and shorter than the total length of the thread of the male threaded part.

It is thus ensured that the male threaded part is in engagement with the female threaded part in the properly centered position of the former before the packing sleeve is engaged to thereby deform the cuff material and the connection is further completed through force.

When effecting a sealed thread connection using the known packing sleeve, the packing sleeve is screwed onto the male threaded part of the thread connection, so that the cuff in mounted position is directed to the free end of the male threaded part, whereafter the female threaded part of the thread connection is screwed onto the male threaded part, or the male threaded part is screwed into the female threaded part so as to form the thread connection.

The packing sleeve according to the invention makes a new method of assembly possible which is not obvious.

This method is characterized according to the invention in that the packing sleeve is screwed over the male threaded part to such an extent that the female threaded part to be subsequently fitted can be screwed onto the male threaded part as far as the desired position without the female threaded part coming into contact with the packing sleeve, whereafter the packing sleeve is gripped manually or mechanically at the stop ring and is turned back in the direction of the female threaded part, whereby the cuff penetrates partly between the thread of the female threaded part and the male threaded part and the cuff is partly upset between the stop ring and the female threaded part so as to obtain a durable, double seal of the thread connection.

This method offers the advantage that the female threaded part and the male threaded part of the thread connection can be positioned in the proper rotational position whereafter the seal can be subsequently effected by turning the universal packing sleeve in the direction of the female threaded part. The stiff stop ring of the packing sleeve makes such a method of assembly possible.

The packing sleeve according to the invention can be designed in different qualities, depending on the requirements set in the specific field of application. Gas connections, for instance, must meet different requirements than water connections. Ready use is facilitated if the packing sleeves are distinguished from each other, for instance by colour codes.

It is observed that the literature discloses various other sealing provisions for threaded connections, involving the use of cuff-shaped elements of deformable threaded or unthreaded material which is received between the threads of the (pipe) thread connection and squeezed between the threads. However, all of these sealing provisions suffer from the disadvantage that either special tools are required for positioning the element on the thread of the male or the female threaded parts, or the element can only function if the thread connection includes an end flange, collar or shoulder for retaining the upset material of the element.

None of these publications discloses the essence of the present invention, viz. a packing sleeve which does not require special provisions in the thread connection to be sealed, in particular a packing sleeve which is fitted with a stop of its own in the form of the stop ring which can be secured on the end of the male threaded part and against which the material of the cuff can be compressed as the connection is tightened.

To further explain the invention, some embodiments of the universal packing sleeve will now be described, with reference to the accompanying drawings.
Fig. 1 is a sectional view of a packing sleeve according to the invention;
Fig. 2 is a sectional view of a second embodiment of a packing sleeve; and
Fig. 3 is a sectional view of a third embodiment of a packing sleeve.

The figures show the effectuation of a pipe thread connection. The female threaded part 1, shown in broken lines, is the end of a pipe, tap or the like, and is provided on the inside with thread 1a. The male threaded part 2, which is also shown in broken lines, forms the end of a second pipe or the like and is provided on the outside with thread 2a. The object of the invention is to provide a packing sleeve 3 which can replace materials such as hemp, tape, and paste as sealing/retaining means in a pipe thread connection and which can be mounted without special aids or tools.

To that end, the packing sleeve 3 is provided with an annular body which, by design and material selection, forms a stiff stop ring 4 for upsetting a flexible cuff 5 attached to the stop ring and for enabling the packing sleeve 3 to be gripped by hand or with tools.

Before the connection between the male threaded part 2 and the female threaded part 1 of the two pipes or the like is effected, the packing sleeve 3 is positioned over the male threaded part 2 of the thread connection, whilst it can be ensured that the stop ring 4 remains in position adjacent the pipe end of the thread 2a and the cuff 5 extends over the thread 2a. As the female threaded part 1 is being screwed on, the plastics of the cuff 5 is upset, penetrates partly between the threads 1a and 2a into sealing engagement therewith, whilst a part of the cuff 5 between the front end of the female threaded part 1 and the stop ring 4 ensures complete circumferential sealing and retention. It is also possible to fit the packing sleeve 3 onto the male threaded part 2 to such an extent that the female threaded part 1 can be screwed onto the male threaded part 2 as far as the desired position, without the female threaded part 1 coming into contact with packing sleeve 3, whereafter the packing sleeve 3 is turned backwards, i.e., in the direction of the female threaded part 1, whereby a part of the cuff 5 penetrates between the threads 1a and 2a and a part of the cuff 5 is upset between the front end of the female threaded part 1 and the stop ring 4, so that the double seal described hereinbefore is obtained.

The seal that is thus obtained is of such good quality that it is suitable for pipes or the like conveying liquids as well as gases. Unlike applying the normal sealing means, fitting the cuff 5 requires no skill, and a packing sleeve 3 of the present type can be fitted very quickly.

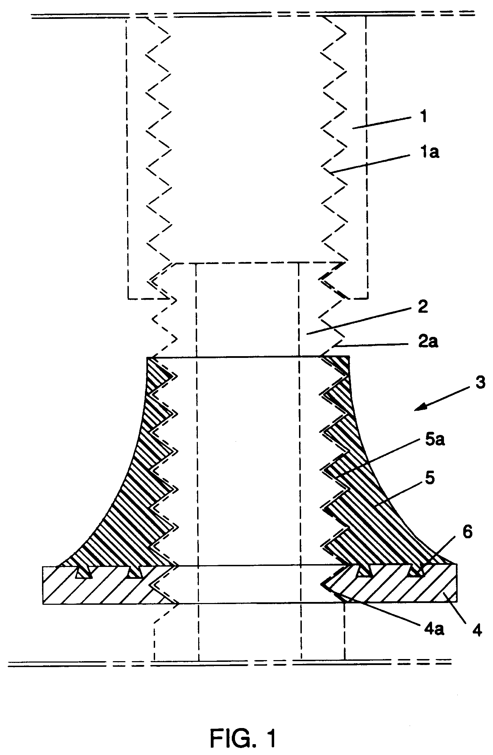

In the embodiments of the packing sleeve 3 as shown in Figs 1, 2 and 3, the cuff 5 has an inside diameter which is smaller than the outside diameter of the thread 2a of the male threaded part 2 and the free end of the cuff 5 has a smaller outside diameter than the outside diameter of the inner thread 1a of the female threaded part 1 so that it is guaranteed that the cuff material is engaged directly upon initiation of the effectuation of the thread connection.

Further, in all embodiments shown the cuff 5 tapers from the stop ring 4 towards the free end, so that when the packing sleeve 3 is being applied, the distribution of the cuff material on the male threaded part 2 of the thread connection will be approximately the same as in the case of hemp or tape wound onto the thread by hand. Further, the stop ring 4, as shown in the embodiments, may be provided with internal thread 4a fitting the thread of the thread connection to be sealed. The internal thread 4a on the ring 4 has been selected such that at the end of the thread 2a of the male threaded part 2 the ring 4 can still be tightened by hand.

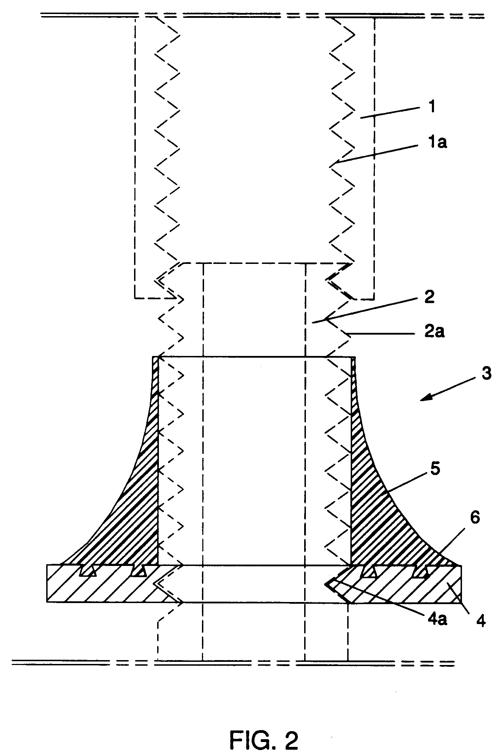

The packing sleeves shown in Figs 1 and 2 have a metal or plastics ring 4 and a cuff 5 of rubber, synthetic rubber or plastics, for instance Teflon. In these examples, the cuff 5 has been connected to ring 5 by means of dovetails 6. Naturally, other joints are also possible. In the embodiment of Fig. 1, the cuff 5 is moreover provided with an internal thread 5a so that it is guaranteed that the cuff material is engaged directly by the thread 1a, 2a of the pipe connection.

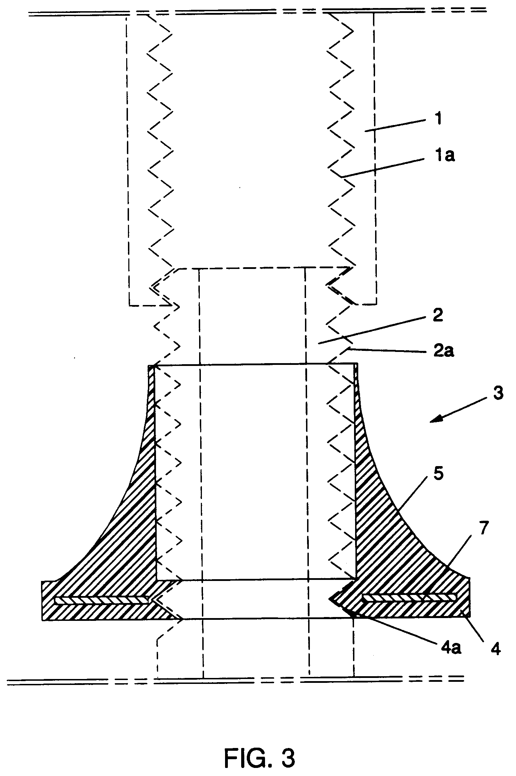

The packing sleeve 3 shown in Fig. 3 is a one-piece sleeve made of plastics, the ring 4 having been reinforced with a metal ring 7 arranged therein, so that the ring 4 can serve as a stiff stop for retaining the relatively flexible cuff material that is being upset as the thread connection is effected.

As shown, the length of the cuff 5 is preferably chosen to be a few threads shorter than the normalized length of the male threaded part 2. In practice, a cuff length of 1-3 times the pitch of the thread has been found to be satisfactory. It is thereby ensured that the female threaded part 1 is in engagement with the male threaded part 1 in the properly centered position before the packing sleeve 3 is engaged to thereby deform the cuff material and the connection is further completed through the application of force. It is observed that the stop ring 5 does not have to be turned as far as the end of the male threaded part 2. It is also possible for the packing sleeve 3 to be turned so as to abut the female threaded part 1 and thereby form a seal. Accordingly, male threaded parts 2 having a continuous thread 2a can also be used.

It will be clear that the invention is not limited to the embodiment described but various modifications are possible within the framework of the invention.

Essential is that the packing sleeve according to the invention requires no special provisions in the thread connection to be sealed inasmuch as it is provided with a stop of its own in the form of the stop ring which can be secured on the end of the male thread and against which the material of the cuff can be compressed as the connection is tightened.

## Claims

1. A packing sleeve for thread connections, comprising a substantially annular body and a cuff, characterized in that for the universal use of the packing sleeve (3) the annular body (4), by design and material selection, forms a stiff stop ring (4) for upsetting the cuff (5) and for enabling the packing sleeve (3) to be gripped by hand or with tools, and that the cuff (5) is flexible.

2. A packing sleeve according to claim 1, characterized in that the stop ring (4) and the cuff (5) are each made of materials appropriately chosen in view of their functions.

3. A packing sleeve according to any one of the preceding claims, characterized in that the stop ring (4), which can for instance be made of steel, copper or of a plastics, is provided with internal thread (4a) fitting the thread of the screw connection to be sealed.

4. A packing sleeve according to claim 3, characterized in that the internal thread (4a) has been chosen such that at the end of the thread (2a) of the male threaded part (2) the ring (4) can still be tightened by hand.

5. A packing sleeve according to any one of claims 1-4, characterized in that the ring (4) is made of a stiff yet soft plastics so that thread can be tapped as the sleeve is being screwed on.

6. A packing sleeve according to any one of claims 1-5, characterized in that the cuff (5) has an inside diameter which is smaller than the outside diameter of the thread (2a) of the male threaded part (2) of a thread connection.

7. A packing sleeve according to any one of the preceding claims, characterized in that the cuff (5) at the free end thereof has a smaller diameter than the outside diameter of the internal thread (1a) of the female threaded part (1) of a thread connection.

8. A packing sleeve according to any one of the preceding claims, characterized in that the cuff (5) is provided with thread (5a) on the inside.

9. A packing sleeve according to any one of the preceding claims, characterized in that the stop ring (4) is made of polyoxymethylene, polyacetal or a similar plastics and that the cuff (5) is made of synthetic rubber, rubber, polytetrafluoroethene (Teflon) or a similar plastics.

10. A packing sleeve according to any one of claims 1-8, characterized in that the ring (4) is made of metal and the cuff (5) is made of rubber, synthetic rubber, Teflon or a similar plastics.

11. A packing sleeve according to any one of claims 1-8, characterized in that the packing sleeve (3) is designed as one piece, the stop ring (4), by design or an (after)treatment, having a stiffness such that it can serve for upsetting the cuff (5) and for enabling the packing sleeve (3) to be gripped by hand or with tools.

12. A packing sleeve according to claim 1, characterized in that the stiffness of the stop ring (4) has been obtained by a metal ring (7) embedded therein.

13. A packing sleeve according to any one of the preceding claims, characterized in that the length of the cuff (5) is at least equal to the pitch of the thread (2a) of the male threaded part (2) and shorter than the total length of the thread (2a) of the male threaded part (2).

14. A method of sealing thread connections using a universal packing sleeve according to any one of the preceding claims, in which the packing sleeve is screwed onto the male threaded part of the thread connection in such a manner that the cuff in mounted position is directed towards the free end of the male threaded part, whereafter the female threaded part of the thread connection is screwed onto the male threaded part so as to form a thread connection, characterized in that the packing sleeve (3) is screwed over the male threaded part (2) to such an extent that the female threaded part (1) to be subsequently fitted can be screwed onto the male threaded part as far as the desired position without the female threaded part (1) coming into contact with the packing sleeve (3), whereafter the packing sleeve (3) is gripped manually or mechanically at the stop ring (4) and is turned backwards in the direction of the female threaded part (1), whereby the cuff (5) penetrates partly between the thread (1a, 2a) of the female threaded part (1) and the male threaded part (2) and the cuff (5) is partly upset between the stop ring (4) and the female threaded part (1) for obtaining a durable, double seal of the thread connection.
